# FASCICULE DE BREVET EUROPEEN

(11) **EP 0 452 187 B1**
(45) Date de publication et mention de la délivrance du brevet: **15.03.1995**
(21) Numéro de dépôt: 91400863.6
(22) Date de dépôt: 29.03.1991
(51) Int. Cl.: F02D 1/18, F16D 3/10

(54) **Dispositif d'avance automatique hydraulique d'injection**
Vorrichtung zum hydraulischen automatischen Steuern des Förderbeginns
Hydraulic automatic injection advance device

(30) Priorité: 02.04.1990 FR 9004196
(43) Date de publication de la demande: 16.10.1991
(73) Titulaire: RENAULT VEHICULES INDUSTRIELS, 69003 Lyon (FR)
(72) Inventeur: Morin, René, F-42520 Saint-Pierre-de-Boeuf (FR)
(74) Mandataire: Ernst-Schonberg, Michel

(56) Documents cités:
- FR-A- 2 108 744
- FR-A- 2 348 368
- FR-A- 2 445 440
- FR-A- 2 526 867
- FR-A- 2 610 043
- GB-A- 2 024 989
- GB-A- 2 140 125
- GB-A- 2 207 731
- PATENT ABSTRACTS OF JAPAN vol. 7, no. 37 (M-193)(1182) 15 février 1983, & JP-A-57 188735 (DIESEL KIKI) 19 novembre 1982

## Description

La présente invention a pour objet un dispositif d'avance automatique commandé hydrauliquement pour système d'injection de carburant notamment pour pompe d'injection de moteur Diesel.

On sait que sur un moteur Diesel, en particulier un gros moteur équipant un véhicule industriel, il est indispensable d'introduire dans la transmission de mouvement aboutissant à l'arbre de la pompe d'injection, un décalage angulaire variable tenant compte des conditions instantanées de fonctionnement du moteur. On connaît des dispositifs automatiques mécaniques de réglage d'avance à l'injection qui supportent cependant mal des efforts d'entraînement élevés.

On connaît également, en particulier par le brevet français 2 445 440, un dispositif automatique hydraulique de réglage d'avance pour une pompe d'injection de moteur Diesel capable de s'adapter directement sur le moteur par l'intermédiaire d'une bride de fixation, le dispositif d'avance pouvant être logé à l'intérieur même du carter de distribution du moteur Diesel. Tel qu'il est décrit dans ce brevet antérieur, le dispositif d'avance comprend un moyeu solidaire de la pompe d'injection, un boîtier entourant le moyeu et comportant des galets. Une masselotte excentrée est montée sur le moyeu de façon à pouvoir osciller sous l'action de la force centrifuge. Des pistons de commande d'avance viennent coopérer avec les galets afin de provoquer un décalage angulaire entre le moyeu et le boîtier. L'un des pistons agit sur la masselotte par l'intermédiaire d'un ressort. La pression interne du dispositif est régulée automatiquement au moyen d'un distributeur à fuite contrôlée.

Dans un tel dispositif l'avance à l'injection est automatiquement pilotée par la vitesse de rotation du dispositif, la force centrifuge agissant sur la masselotte qui prend une position d'équilibre résultant de la force centrifuge agissant sur la masselotte et de la tension du ressort. La pression d'huile agissant sur les pistons est régulée par le distributeur piloté par la masselotte. Dans ce dispositif automatique hydraulique d'avance à l'injection de type connu on obtient un décalage angulaire dépendant uniquement de la vitesse de rotation.

Il est cependant apparu nécessaire de faire intervenir dans la régulation d'autres paramètres de fonctionnement du moteur et en particulier la température du fluide hydraulique et éventuellement la charge de la pompe d'injection. La charge de la pompe d'injection constitue un paramètre de fonctionnement dont dépend la pression du fluide hydraulique laquelle est directement proportionnelle au couple à transmettre.

La présente invention a donc pour objet un dispositif d'avance automatique hydraulique pour injection comportant des moyens de correction capables de tenir compte des paramètres supplémentaires que constituent la température du fluide hydraulique et éventuellement la charge de la pompe d'injection.

Le dispositif d'avance automatique hydraulique à l'injection, notamment pour pompe d'injection de moteur Diesel, selon l'invention comprend : un moyeu solidaire de la pompe d'injection; un boîtier entraîné en rotation entourant le moyeu et comportant deux galets disposés parallèlement à l'axe du boîtier à distance de cet axe; une masselotte exentrée montée sur le moyeu de façon à pouvoir se déplacer dans un sens sous l'action de la force centrifuge. Deux pistons de commande d'avance d'axe orthogonal à l'axe du moyeu sont montés dans le moyeu de façon à pouvoir coulisser chacun dans un alésage borgne. Chaque piston est muni d'une rampe d'appui latérale capable de coopérer avec l'un des galets du boîtier afin de provoquer un décalage angulaire entre le moyeu et le boîtier. L'un des pistons de commande d'avance agit sur la masselotte par l'intermédiaire d'un ressort. Cette action s'exerçant dans l'autre sens par rapport à l'action de la force centrifuge. Un circuit hydraulique traverse le moyeu et comporte un distributeur à fuite contrôlée réglant la pression agissant sur les pistons en fonction de la position de la masselotte. Le dispositif comprend en outre un obturateur commandé par un élément sensible à la température monté dans le circuit hydraulique soit en amont soit en aval du distributeur piloté par la masselotte.

L'obturateur peut comprendre un piston muni d'un ressort de rappel et soumis à l'action de l'élément thermosensible, l'ensemble étant monté dans le moyeu parallèlement à l'axe dudit moyeu pour éviter que la force centrifuge ait un effet sur le déplacement de l'obturateur.

L'élément sensible à la température est de préférence disposé de façon qu'une augmentation de température du fluide hydraulique entraîne le déplacement de l'obturateur dans le sens de l'ouverture. De cette manière lorsque la température s'élève et devient supérieure à une valeur de consigne le fluide peut s'échapper entraînant une chute de pression dans le circuit hydraulique provoquant ainsi une diminution du décalage angulaire.

Selon une caractéristique supplémentaire de l'invention, le dispositif comdes moyens pour modifier la position d'équilibre de la masselotte en fonction de la pression régnant dans le circuit hydraulique.

Un piston supplémentaire peut par exemple être monté dans le piston de commande d'avance et servir d'appui au ressort, ledit piston supplémentaire étant soumis à la pression régnant dans le circuit hydraulique. De cette manière, la tension du ressort augmente lorsque la pression augmente dans le circuit hydraulique. On obtient une correction d'avance dont l'amplitude de décalage diminue avec l'augmentation de la pression d'huile dans le circuit hydraulique c'est-à-dire avec l'augmentation du couple à transmettre elle-même proportionnelle à la charge de la pompe d'injection. Le décalage diminue donc lorsque la charge de la pompe d'injection augmente.

Dans un autre mode de réalisation, le dispositif comprend un piston de correction d'avance monté dans le moyeu, soumis à la pression régnant dans le circuit hydraulique et agissant directement sur la masselotte. Le piston de correction d'avance est avantageusement placé de façon à agir sur la masselotte dans le même sens que la force centrifuge c'est-à-dire à l'opposé de l'action exercée par le ressorts. Une force variable en fonction de la pression régnant dans le circuit hydraulique vient donc s'ajouter à la force centrifuge appliquée sur la masselotte, modifiant l'équilibre de celle-ci. On obtient finalement une correction d'avance dont l'amplitude de décalage augmente avec l'augmentation du couple à transmettre et donc avec l'augmentation de la charge de la pompe d'injection.

L'invention sera mieux comprise à l'étude de quelques modes de réalisation décrits à titre d'exemples nullement limitatifs et illustrés par les dessins annexés sur lesquels :
la figure 1 est une vue en coupe d'un dispositif d'avance automatique hydraulique fonction de la pression régant dans le circuit hydraulique;
la figure 2 est une vue en coupe analogue d'un dispositif d'avance automatique hydraulique fonction de la pression régnant dans le circuit hydraulique;
la figure 3 est une vue en coupe d'un troisième mode de réalisation selon l'invention; et
la figure 4 est une vue en coupe selon IV-IV de la figure 3.

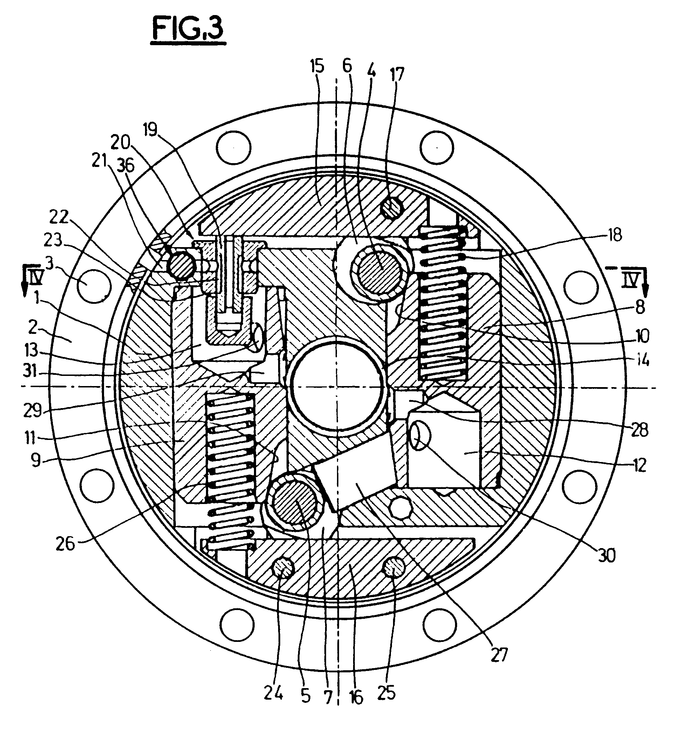

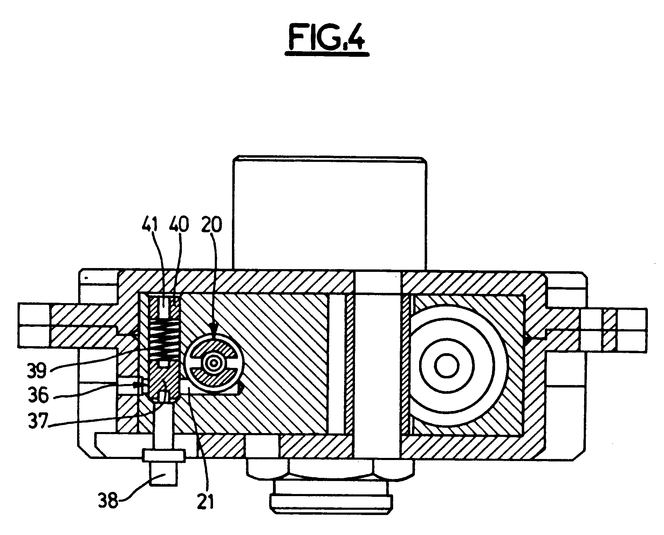

Dans le mode de réalisation illustré sur les figures 3 et 4 où les pièces identiques portent les mêmes références, un obturateur référencé de manière générale 36 est monté dans la canalisation de sortie 21, en aval du distributeur 20. L'obturateur comprend un piston 37 (figure 4) disposé parallèlement à l'axe du dispositif d'avance. Le piston 37 est soumis d'un côté à l'action d'un élément thermostatique à cire 38 et de l'autre côté à l'action d'un ressort hélicoïdal de compression 39 en appui sur une butée fixe 40 de façon que le ressort 39 assure le retour du piston 37 à sa position de fermeture lorsque la température décroît. Lorsque la température augmente, le piston 37 est déplacé de façon à dégager le passage de sortie 21. On notera que l'espace compris entre le piston 37 et la butée fixe 40 communique avec l'atmosphère par le trou axial 41 pratiqué dans la butée 40. De plus le piston 37 est placé dans le moyeu 1 de façon transversale c'est-à-dire parallèlement à l'axe dudit moyeu afin que son déplacement ne soit pas perturbé par la force centrifuge.

Le dispositif fonctionne de la manière suivante : lorsque la température est inférieure à une température de consigne de l'élément thermostatique 38, le piston 37 obture totalement l'orifice de sortie 21 de sorte que le fluide hydraulique ne peut pas s'échapper du circuit hydraulique du dispositif d'avance automatique. Le circuit hydraulique étant alimenté en permanence par un fluide sous pression, une pression maximale s'établit dans le dispositif d'avance automatique provoquant ainsi un décalage angulaire maximal par action des deux pistons de commande d'avance 8, 9 coopérant avec les deux galets 4, 5. L'avance est donc maximale pour le démarrage à froid du moteur équipé d'un tel dispositif.

Lorsque la température du fluide hydraulique s'élève et devient supérieure à la température de consigne de l'élément thermostatique 38, ce dernier repousse le piston 37 en comprimant le ressort 39. Le passage de sortie 21 se trouve dégagé ce qui entraîne une diminution de la pression à l'intérieur du dispositif d'avance automatique. La pression se trouve alors régulée par le calibrage et la fuite du fluide hydraulique par les fentes latérales 22 du tiroir mobile 19 c'est-à-dire en fonction de la vitesse et selon la force centrifuge exercée sur la masselotte 15 qui prend une position d'équilibre dépendant également de l'action du ressort 18.

Le dispositif fonctionnerait de la même manière si l'obturateur 36 était placé en amont du distributeur 20.

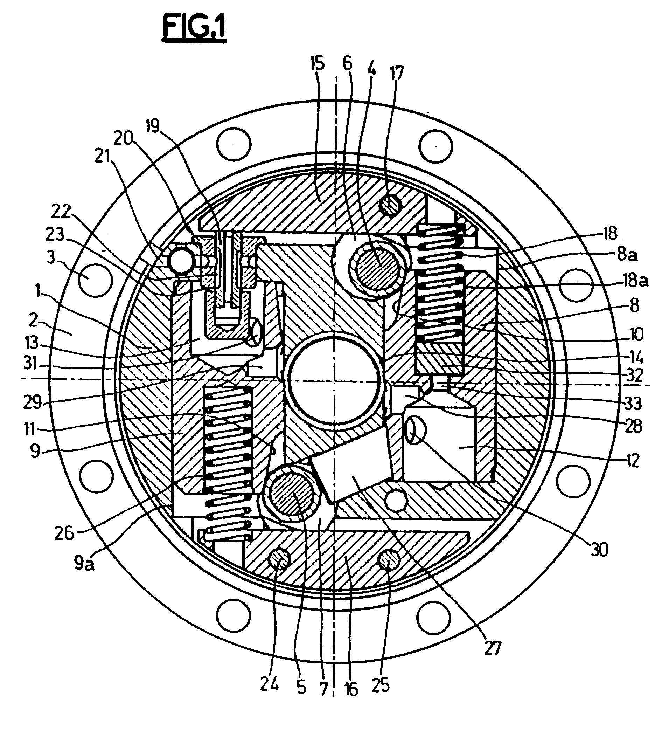

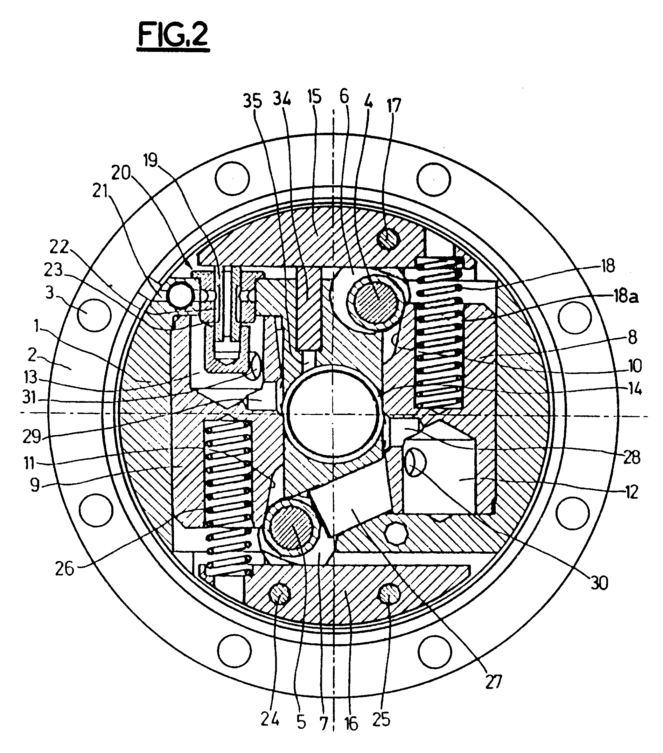

On peut également combiner le mode de réalisation illustré sur la figure 3 dans lequel la correction se fait par l'action de la température avec l'un quelconque des modes de réalisation illustrés sur la figure 1 et 2 où la correction dépend de la pression régnant dans le circuit hydraulique c'est-à-dire de la charge de la pompe d'injection, pour obtenir l'action simultanée des deux paramètres en fonction de l'application désirée.

Tel qu'il est illustré sur la figure 1, le dispositif est constitué par un ensemble compact tournant comprenant principalement d'une part un moyeu 1 solidaire de l'arbre à cames, de la pompe d'injection non représentée sur la figure et constituant une partie menée; et d'autre part un boîtier 2 entraîné en rotation constituant donc une partie menante entourant le moyeu 1 et pouvant être fixé par des trous 3 directement sur un pignon d'entraînement non représenté sur la figure.

Le boîtier 2 comporte intérieurement deux galets 4, 5 diamètralement opposés parallèles à l'axe du dispositif et situés à distance de cet axe. Les galets 4, 5 qui se présentent sous la forme de portions d'axes solidaires du boîtier 2 sont logés à l'intérieur d'évidements cylindriques 6, 7 du moyeu 1 de façon à permettre une variation de la position angulaire du moyeu 1 par rapport au boîtier 2.

Les galets 4, 5 sont respectivement associés à des pistons de commande d'avance 8, 9. Chaque piston 8, 9 est monté de façon à pouvoir coulisser dans un alésage borgne 8a, 9a du moyeu 2 et comporte une rampe d'appui latérale 10, 11 qui coopère avec l'un des galets correspondants 4, 5 Des chambres de pression 12, 13 sont délimitées à l'arrière des pistons 8, 9 et sont en communication avec un conduit annulaire 14 dans lequel débouche une alimentation en fluide sous pression par l'intermédiaire d'un joint tournant non représenté sur la figure.

Le dispositif comprend deux masselottes 15 et 16 diamètralement opposées, dont le grand axe est sensiblement perpendiculaire aux axes des pistons 8, 9. La masselotte 15 est montée de manière pivotante autour d'un axe 17 et est soumise à l'action du piston de commande d'avance 8 par l'intermédiaire d'un ressort 18 qui est ici un ressort de compression hélicoïdal disposé selon l'axe du piston 8 dans un alésage 18a de la partie avant de ce dernier. On notera que l'axe de pivotement 17 est parallèle à l'axe du moyeu 1. Le ressort 18 agit sur l'une des extrémités de la masselotte 15 d'un côté de l'axe de pivotement 17. L'autre extrémité de la masselotte 15 vient agir sur un tiroir coulissant 19 d'un distributeur à fuite contrôlée référencé 20 dans son ensemble, monté entre la chambre de pression 13 située à l'arrière du piston 9 et une canalisation 21 par laquelle le fluide hydraulique peut se diriger vers la décharge. Le tiroir mobile 19 comporte des fentes latérales 22 sur une partie de sa longueur de façon à pouvoir dégager un passage 23 pour le fluide hydraulique passant de la chambre de pression 13 vers la canalisation de sortie 21. Le centre de gravité de la masselotte pivotante 15 est situé entre l'axe de pivotement 17 et l'axe géométrique du tiroir mobile 19.

La masselotte 16 est montée de façon identique à la masselotte pivotante 15. Toutefois la masselotte 16 est immobile et elle est fixée par deux axes 24, 25 sur le moyeu 1. Un deuxième ressort hélicoïdal de compression 26 monté dans un asélage borgne de la partie avant du piston 9 vient prendre appui sur l'une des extrémités de la masselotte 16. L'existence de la deuxième masselotte 16 permet de supprimer tout risque de balourd lors de la rotation de l'ensemble du dispositif. Compte tenu de la très faible masse du tiroir 19 vis-à-vis de la masse de masselotte pivotante 15, la force centrifuge agissant sur le tiroir 19 est insignifiante et n'entre pas en ligne de compte dans le fonctionnement du dispositif.

Une pièce de butée 27 montée entre le galet 5 et le piston 8 coopère avec ce dernier par une rampe inclinée latérale de façon à freiner le mouvement de retour du piston 8.

Le circuit hydraulique à l'intérieur du moyeu 1 comporte des passages radiaux 28, 29 ainsi que des orifices 30 et 31 autorisant le passage du fluide hydraulique depuis la chambre de pression 12 jusqu'à la chambre de pression 13 en passant par le passage annulaire 14.

Dans le mode de réalisation illustré sur la figure 1, le ressort 18 s'appuie d'une part sur la masselotte mobile 15 et d'autre part sur un piston supplémentaire d'appui 32 logé à l'intérieur de l'alésage 18a du piston de commande d'avance 8. Un passage 33 met en communication la chambre de pression 12 avec la face arrière du piston supplémentaire 32 qui se trouve donc ainsi soumis à la pression régnant dans le circuit hydraulique.

Le fonctionnement du dispositif est le suivant. Lorsque le système est au repos, c'est-à-dire lorsque les forces centrifuges n'ont encore aucune action sur la masselotte mobile 15, celle-ci est uniquement soumise à l'action du ressort 18. Le tiroir 19 est alors repoussé vers l'intérieur et le distributeur 20 relie à la décharge les chambres de pression 12 et 13. Les pistons 8 et 9 restent au repos. A partir d'une certaine vitesse de rotation, la masselotte pivotante 15 s'écarte vers l'extérieur sous l'effet de la force centrifuge et le tiroir 19 se déplace vers l'extérieur diminuant ainsi la fuite du fluide hydraulique vers la décharge ce qui fait monter la pression dans les chambres 12 et 13. Les deux pistons 8 et 9 se déplacent alors vers l'avant c'est-à-dire en direction des deux galets 4 et 5, ce qui a pour conséquence, grâce aux rampes inclinées 10 et 11 de créer un certain décalage angulaire entre le moyeu 1 et le boîtier 2 et d'augmenter la compression des ressorts 18 et 26. Le ressort 18 s'oppose à la force centrifuge en tendant à ramener vers l'intérieur le centre de gravité de la masselotte pivotante 15.

Par ailleurs la pression établie dans la chambre de pression 12 s'applique directement sur le piston supplémentaire 32 qui se déplace et augmente la compression du ressort 18 modifiant ainsi l'effort qu'il exerce sur la masselotte pivotante 15. La position d'équilibre de la masselotte pivotante 15 se trouve donc modifiée par rapport à la position qu'elle occuperait en l'absence du piston supplémentaire 32. La position d'équilibre modifiée correspond à un certain décalage angulaire différent de celui qui aurait été obtenu sans l'existence du piston supplémentaire 32. On obtient ainsi une correction d'avance dont l'amplitude de décalage diminue avec l'augmentation de la pression c'est-à-dire avec l'augmentation de la charge de la pompe d'injection.

Le deuxième mode de réalisation de l'invention illustré sur la figure 2 sur laquelle les pièces identiques portent les mêmes références, se différencie du mode de réalisation précédent par le fait que le moyen de correction du décalage angulaire n'est plus cette fois une modification de la tension du ressort 18 mais une action directe sur la masselotte pivotante 15. Dans ce mode de réalisation en effet, le ressort 18 prend appui sur le fond borgne de l'alésage 18a pratiqué dans la partie avant du piston de commande d'avance 8. Un piston de correction d'avance 34 est logé dans un orifice ménagé dans le moyeu 1 dans une position se trouvant à l'opposé du ressort 18 par rapport à l'axe de pivotement 17. Le piston de correction d'avance 34 est soumis à la pression régnant dans le circuit hydraulique par l'intermédiaire d'un passage 35 communiquant avec le passage annulaire 14. Le piston 34 appuie directement sur la masselotte pivotante 15 et fait pivoter celle-ci autour de l'axe de pivotement 17 à l'encontre de l'action du ressort 18 c'est-à-dire dans le même sens que la force centrifuge compte tenu de la position du piston 34 par rapport à l'axe de pivotement 17.

Dans ces conditions, la pression régnant à l'intérieur du circuit hydraulique et s'appliquant directement sur le piston de correction d'avance 34 a pour effet d'ajouter une force variable en fonction de la pression à la force centrifuge s'exerçant sur la masselotte 15 lors de la rotation du dispositif. La position d'équilibre de la masselotte 15 se trouve ainsi modifiée en fonction de la pression régnant dans le circuit hydraulique entraînant par conséquent une correction du décalage angulaire qui aurait été obtenu en l'absence du piston de correction 34. On obtient une correction d'avance dont l'amplitude de décalage augmente avec l'augmentation de la pression du circuit hydraulique c'est-à-dire avec l'augmentation de la charge de la pompe d'injection.

Il est possible de combiner les modes de réalisation illustrés sur les figures 1 et 2 en prévoyant à la fois une modification de la tension du ressort 18 comme illustré sur la figure 1 et une action directe sur la masselotte 15 comme illustré sur la figure 2. Les deux actions peuvent être modulées en variant les orifices de passage respectifs 33 et 35 selon la correction d'avance que l'on souhaite obtenir pour chaque cas particulier.

## Revendications

1. Dispositif d'avance automatique hydraulique à l'injection, notamment pour pompe d'injection de moteur Diesel, du type comprenant un moyeu (1) solidaire de la pompe d'injection; un boîtier (2) entraîné en rotation, entourant le moyeu (1) et comportant deux galets (4, 5) disposés parallèlement à l'axe du boîtier à distance de cet axe; une masselotte excentrée (15) montée sur le moyeu (1) de façon à pouvoir se déplacer dans un sens sous l'action de la force centrifuge; deux pistons de commande d'avance (8, 9) d'axe orthogonal à l'axe du moyeu, montés dans ledit moyeu de façon à pouvoir coulisser chacun dans un alésage borgne et munis chacun d'une rampe d'appui latérale (10, 11) capable de coopérer avec l'un desdits galets (4, 5) afin de provoquer un décalage angulaire entre le moyeu (1) et le boîtier (2), l'un des pistons (8) agissant dans l'autre sens sur la masselotte (15) par l'intermédiaire d'un ressort (18); un circuit hydraulique traversant le moyeu et comportant un distributeur à fuite contrôlée (20) réglant la pression agissant sur les pistons (8, 9) en fonction de la position de la masselotte (15), caractérisé par le fait qu'il, comprend un obturateur (36) commandé par un élément sensible à la température (38) monté dans le circuit hydraulique.

2. Dispositif selon la revendication 1, caractérisé par le fait que l'élément sensible à la température (38) est disposé de façon qu'une augmentation de température entraîne le déplacement de l'obturateur dans le sens de l'ouverture.

3. Dispositif selon l'une des revendications 1 à 2 caractérisé par le fait que l'obturateur (36) comprend un piston (37) muni d'un ressort de rappel (39) et soumis à l'action de l'élément thermosensible (38), l'ensemble étant monté dans le moyeu (1) parallèlement à l'axe dudit moyeu.

4. Dispositif selon l'une quelconque des revendications précédentes caractérisé par le fait qu'un' piston supplémentaire (32) sert d'appui au ressort (18) monté dans le piston de commande d'avance (8), ledit piston supplémentaire (32) étant soumis à la pression régnant dans le circuit hydraulique.

5. Dispositif selon l'une quelconque des revendications précédentes, caractérisé par le fait qu'il comprend un piston de correction d'avance (34) monté dans le moyeu (1), soumis à la pression régnant dans le circuit hydraulique et agissant directement sur la masselotte (15).

6. Dispositif selon la revendication 4, caractérisé par le fait que le piston de correction d'avance (34) est placé de façon à agir sur la masselotte dans le même sens que la force centrifuge.

## Claims

1. Hydraulic automatic injection advance device particularly for an injection pump of a diesel engine, of the type comprising a hub (1) integral with the injection pump; a rotary driven housing (2) surrounding the hub (1) and comprising two rollers (4, 5) disposed parallel to the axis of the housing at a distance therefrom; an eccentric flyweight (15) mounted on the hub (1) such that it can move in one direction as a result of the centrifugal force; two advance control pistons (8, 9) having an axis orthogonal to the axis of the hub, mounted in said hub such as each to be able to slide in a blind bore and each having a lateral supporting ramp (10, 11) capable of cooperating with one of said rollers (4, 5) in order to cause an angular offset between the hub (1) and the housing (2), one of the pistons (8) acting in the other direction upon the flyweight (15) by means of a spring (18); and a hydraulic circuit crossing the hub and comprising a controlled leakage distributor (20) regulating the pressure acting upon the pistons (8, 9) according to the position of the flyweight (15), characterised by the fact that it comprises a valve (36) controlled by a temperature sensitive element (38) mounted in the hydraulic circuit.

2. Device according to claim 1, characterised by the fact that the temperature sensitive element (38) is disposed so that an increase in temperature causes the displacement of the valve in the opening direction.

3. Device according to one of claims 1 to 2, characterised by the fact that the shutter (36) comprises a piston (37) with a spring-return (39) subjected to the action of the thermo-sensitive element (38), the installation being mounted in the hub (1) parallel to the axis of said hub.

4. Device according to any one of the preceding claims, characterised by the fact that an additional piston (32) serves as a support to the spring (18) mounted in the advance control piston (8), said additional piston (32) being subjected to the prevailing pressure in the hydraulic circuit.

5. Device according to any one of the preceding claims, characterised by the fact that it comprises an advance correction piston (34) mounted in the hub (1), subjected to the prevailing pressure in the hydraulic circuit and acting directly upon the flyweight (15).

6. Device according to claim 4, characterised by the fact that the advance correction piston (34) is placed so that it acts upon the flyweight in the same direction as the centrifugal force.

## Patentansprüche

1. Vorrichtung zum hydraulischen automatischen Verstellen des Einspritzbeginns, insbesondere einer Einspritzpumpe eines Dieselmotors, mit: einer mit der Einspritzpumpe fest verbundenen Nabe (1); einem in Drehungen versetztes und die Nabe umgebendes Gehäuse (2), welches zwei Rollen (4, 5) aufweist, die parallel zur Gehäuseachse und im Abstand zu ihr angeordnet sind; einem Fliehgewicht (15), das exzentrisch derart an der Nabe 1 befestigt ist, daß es unter der Einwirkung der Zentrifugalkraft in eine Richtung verschiebbar ist; zwei den Einspritzbeginn steuernde Kolben (8, 9), deren Achsen senkrecht zur Nabenachse verlaufen und die in der Nabe derart angeordnet sind, daß sie jeweils in einer Sackbohrung gleiten können und deren jeder mit einer seitlichen Stützrampe (10, 11) versehen ist, die mit jeweils einer der Rollen (4, 5) dahingehend zusammenwirkt, daß eine Winkelverschiebung zwischen der Nabe (1) und dem Gehäuse (2) auftritt, wobei einer der Kolben (8) in entgegengesetzter Richtung über eine Feder (18) auf das Fliehgewicht (15) wirkt; einem hydraulischen Kreis, welcher die Nabe durchsetzt und der einen gesteuerten Auslaßverteiler (20) besitzt, der den auf die Kolben (8, 9) wirkenden Druck als Funktion der Stellung des Fliehgewichtes (15) regelt, dadurch gekennzeichnet, daß sie einen Verschluß (36) aufweist, der durch ein im hydraulischen Kreis vorgesehenes temperaturempfindliches Teil (38) gesteuert wird.

2. Vorrichtung nach Anspruch 1, dadurch gekennzeichnet, daß das temperaturempfindliche Teil (38) derart angeordnet ist, daß eine Erhöhung der Temperatur eine Verschiebung des Verschlusses in Öffnungsrichtung bewirkt.

3. Vorrichtung nach einem der Ansprüche 1 und 2, dadurch gekennzeichnet, daß der Verschluß (36) einen Kolben (37) aufweist, mit einer Rückholfeder (39), der der Einwirkung eines Thermoelementes (38) ausgesetzt ist, wobei diese Anordnung in der Nabe (1) parallel zu deren Achse eingebaut ist.

4. Vorrichtung nach einem der vorhergehenden Ansprüche, dadurch gekennzeichnet, daß ein zusätzlicher Kolben (32) als Stütze für die Feder (18) dient, der im Kolben (8) für die Steuerung der Verstellung angeordnet ist, wobei der zusätzliche Kolben (32) dem im hydraulischen Kreis herrschenden Druck ausgesetzt ist.

5. Vorrichtung nach einem der vorhergehenden Ansprüche, dadurch gekennzeichnet, daß sie einen den Einspritzbeginn korrigierenden Kolben (34) aufweist, der in der Nabe (1) angeordnet ist, der dem im hydraulischen Kreis herrschenden Druck ausgesetzt ist und der direkt auf das Fliehgewicht (15) wirkt.

6. Vorrichtung nach Anspruch 4, dadurch gekennzeichnet, daß der den Einspritzbeginn korrigierende Kolben (34) derart angeordnet ist, daß er auf das Fliehgewicht in die gleiche Richtung wie die Zentrifugalkraft wirkt.
